Europäisches Patentamt

European Patent Office

Office européen des brevets

(11) Veröffentlichungsnummer: **0 070 482**
**B1**

(12) **EUROPÄISCHE PATENTSCHRIFT**

(45) Veröffentlichungstag der Patentschrift:
23.10.85

(51) Int. Cl.⁴: **E 04 C 5/01**, C 04 B 32/02

(21) Anmeldenummer: **82106193.4**

(22) Anmeldetag: **10.07.82**

(54) Verfahren zum Korrosionsschutz von Armierungseisen, Spannkabeln und dergleichen in Bauteilen.

(30) Priorität: **20.07.81 CH 4750/81**

(43) Veröffentlichungstag der Anmeldung:
**26.01.83 Patentblatt 83/4**

(45) Bekanntmachung des Hinweises auf die Patenterteilung:
**23.10.85 Patentblatt 85/43**

(84) Benannte Vertragsstaaten:
**AT BE CH DE FR GB IT LI NL SE**

(56) Entgegenhaltungen:
**FR - A - 2 454 472**
**US - A - 2 739 871**
**US - A - 3 427 175**
**US - A - 3 801 338**

**CHEMICAL ABSTRACTS, Band 89, 1978, Seite 266, Nr. 64032g, Columbus, Ohio, USA**

(73) Patentinhaber: **Sika AG, vorm. Kaspar Winkler & Co., Tüffenwies 16-22, CH-8048 Zürich (CH)**

(72) Erfinder: **Bürge, Theodor, Waldrütistrasse 3, CH-8954 Geroldswil (CH)**
Erfinder: **Bracher, Gustav, Dr., altes Schulhaus, CH-8911 Rifferswil (CH)**

(74) Vertreter: **Blum, Rudolf Emil Ernst et al, c/o E. Blum & Co Patentanwälte Vorderberg 11, CH-8044 Zürich (CH)**

**Beschreibung**

Betonkonstruktionen wie Hafenmauern, Off-shore-Plattformen, vorgespannter Beton in Meerwasser, Beton mit chloridhaltigen Zusatzmitteln oder chloridhaltigen Zuschlagstoffen werden durch Korrosion gestört.

Korrosion an Armierungseisen tritt in allen Betonkonstruktionen auf, welche

— im Meerwasser liegen (off-shore),
— mit salzhaltigem Sand hergestellt werden,
— mit Sand aus dem Meer hergestellt werden,
— sich an Meeresstränden befinden,
— mit Tausalzen behandelt werden,
— in Industriegegenden stehen (saure Abgase),
— mit Zusatz von chloridhaltigen Abbindebeschleuniger oder Frostschutzmitteln hergestellt werden.

Die Korrosion ist ein elektrochemischer Prozeß. Die Reaktionsprodukte Rost und komplexe Verbindungen mit dem Chlorid weisen ein höheres Volumen auf als die Ausgangsprodukte. Es kommt zu lokalen Rißbildungen und Abplatzungen; dadurch kann weiteres Salz eindringen, und der Korrosionsverlauf wird mehr und mehr beschleunigt.

Gewisse Cemikalien sind nun in der Lage, diesen Prozeß zu verhindern oder zu verzögern. Sie werden in Form eines Zusatzmittels dem Beton bei seiner Herstellung zugegeben und verlängern dadurch angeblich die Dauerhaftigkeit von Betonkonstruktionen. Solche Zusatzmittel sind bereits in den USA und in Japan auf dem Markt. Sie enthalten in der Regel Calciumnitrit als alleinigen oder als Hauptbestandteil. Ebenfalls sind zahlreiche Patente veröffentlicht worden, von denen nur eine Auswahl erwähnt werden soll: CAN 802 281, US-PS 3 427 175, DE-OS 3 005 896, JP-OS 33 940, US-PS 3 210 207, US-PS 3 801 338. Andere Inhibitoren wie Benzoate, Chromate, Phosphate, Amine usw. haben infolge beschränkter Wirkung bis heute keine großtechnische Anwendung gefunden.

Der Nachteil der heute erhältlichen korrosionsschützenden Betonzusatzmittel besteht darin, daß der Inhibitor über die ganze Betonkonstruktion verteilt wird, was zu sehr hohen Zusatzmitteldosierungen führt. Stark konzentrierte Nitrit-Lösungen oder feste Nitritzusätze sind wegen ihrer starken Giftigkeit auf der Baustelle nicht erwünscht. Erwiesenermaßen ist die Wirksamkeit des Zusatzmittels als Korrosionsinhibitor vor seiner Dosierung und zugleich von der Salzkonzentration in der Betonkonstruktion abhängig. Falls durch unsachgemäßes Betonieren größere Risse entstanden sind, ist ein in dieser Zone sich befindendes Armierungseisen trotz zugesetztem Inhibitor vor Korrosion nicht geschützt, da die Salzkonzentration in dieser Zone sehr groß sein kann.

Beton besitzt infolge des stark alkalischen Mediums (pH > 12) an sich korrosionsschützende Eigenschaften, da in diesem pH-Bereich der Armierungsstahl passiviert wird. Bei hohem Zusatz von latenthydraulischen Stoffen kann der pH-Wert allerdings in einen Bereich absinken, welcher nicht mehr korrosionsschützend ist. Selten ist aber ein Beton so dicht, daß keine Chloride eindringen können, oder der Beton enthält bereits Chloride aus Zuschlagmaterial, Wasser oder Zusatzmitteln, so daß er kaum für längere Zeit das Eisen vor Korrosion zu schützen vermag.

Der Erfindung liegt dementsprechend die Aufgabe zugrunde, den Kontakt von korrosionsfördernden Substanzen mit den Armierungseisen zu verhindern.

Die folgenden drei Methoden werden heute in der Praxis angewendet:

— Die Beschichtung der Armierungseisen mit Kunstharzen, vor allem Epoxiden, ergibt einen absoluten Korrosionsschutz, falls die Beschichtung genügend dick und während des Verlegens der Armierungseisen nicht verletzt wird, was praktisch unmöglich ist. Die Nachteile sind: sehr hoher Preis, keine Haftung des Betons auf der Schutzschicht, elektrischer Isolator und bei Fehlstellen Bildung von Lokalelementen, welche zu partieller beschleunigter Korrosion führen.
— Galvanisierte, in der Regel verzinkte Eisen, geben einen guten Korrosionsschutz. Es ist jedoch bekannt, daß die Zinkbeschichtung durch die Alkalität des Zements aufgelöst wird. Die Schutzwirkung ist deshalb zeitlich beschränkt.
— Als dritte Methode ist der sogenannte kathodische Korrosionsschutz bekannt. Dabei wird durch Anlegen einer bestimmten Spannung die Korrosion an den Eisen verhindert. Die Nachteile dieser Methode liegen aber darin, daß je nach Salzkonzentration und Spannungsabfall im Beton für einen optimalen Korrosionsschutz örtlich verschiedene Spannungen angelegt werden müßten. Dies ist in der Praxis weder durchführ- noch kontrollierbar. Falsch angelegter kathodischer Korrosionsschutz kann zu einem Verlust der Haftung der Armierungseisen am Beton oder sogar zu einer beschleunigten Korrosion führen.

Die zum Stand der Technik gehörenden Dokumente US-A-3 427 175, US-A-3 801 338 und FR-A-2 454 472 betreffen keine Beschichtungen für Armierungseisen.

Gegenstand der Erfindung ist deshalb ein Verfahren zum Korrosionsschutz mit einer Beschichtung anzugeben, welche sowohl an den Armierungseisen wie auch am Beton eine vorzügliche Haftung aufweist und dadurch Armierung und Beton kraftschlüssig verbindet. Die Beschichtung muß wasserdicht sein, die Penetration von Salz verhindern und zweck Passivierung der Armierung alkalisch reagieren. Zur Verbesserung der korrosionsschützenden Wirkung und zur Passivierung von Fehlstellen in der Beschichtung werden zusätzlich Korrosionsinhibitoren zugegeben. Alle diese Forderungen werden durch das Verfahren gemäß dem Anspruch 1 erfüllt. Vorteilhafte Ausgestaltungen sind in den Unteransprüchen angegeben.

Der erfindungsgemäße Korrosionsschutz kann als Ein- oder Zweikomponenten-Produkt durch die üblichen Methoden wie Streichen, Rollen, Spritzen oder Tauchen auf die Armierungseisen aufgebracht werden. Das erfindungsgemäße Verfahren kann ebenfalls zur Injektion von Hüllrohren in Spannbeton- oder hängenden Konstruktionen angewendet werden. Ein weiteres Anwendungsgebiet ist die Sanierung von Bauwerken.

Die Erfindung wird nachstehend anhand von Beispielen noch etwas näher erläutert. Die in den Beispielen tabellarisch zusammengefaßten Resultate sind zudem in der Zeichnung graphisch dargestellt. In der Zeichnung zeigt

Figur 1 potentiostatische Belastungsversuche an ungeschützten Mörtelelektroden mit verschiedenen $CaCl_2$-Dosierungen,

Figur 2 potentiostatische Belastungsversuche an Mörtelelektroden mit verschiedenen $CaCl_2$-Dosierungen; Stahlelektroden mit handelsüblichen Korrosionsinhibitoren als Zusatzmittel in Mörtel,

Figur 3 potentiostatische Belastungsversuche an Mörtelelektroden mit verschiedenen $CaCl_2$-Dosierungen; Stahlelektroden mit einem kunststoffvergüteten Mörtel beschichtet,

Figur 4 potentiostatische Belastungsversuche an Mörtelelektroden mit verschiedenen $CaCl_2$-Dosierungen; Stahlelektroden mit erfindungsgemäßen Verfahren geschützt,

Figur 5 Potentialmessungen an Eisenblechen als Funktion der Zeit in einer chloridhaltigen Zementsuspension.

## Beispiel 1

Es werden potentiostatische Belastungsversuche an Mörtelelektroden durchgeführt, um die Wirksamkeit der zugefügten Korrosionsinhibitoren zu testen.

Die Herstellung der Mörtelelektroden, bestehend aus Mörtelprisma (4—4—16 cm) und zentriert eingesetzter Stahlelektrode (Länge 10,5 cm, $\varnothing$ 0,7 cm) erfolgt nach folgendem Schema:

— Mörtelprisma:
Portlandzement, W/Z = 0,5 Zuschlagstoffe 0—6 mm, Zusatzmittel: 1, 2, 3% $CaCl_2$, Korrosionsinhibitor (die Dosierung erfolgt bezüglich des Zementes)

— Beschichtung der Stahlelektroden:
Kunststoff vergüteter Zementmörtel, Komponente A : B = 1 : 4
Komponente A: 27,5% wäßrige, anionische Dispersion eines Acrylsäureester-Copolymerisats.
Komponente B: 38% hochwertiger Portlandzement, 62% feine Zuschlagstoffe
und Verarbeitungshilfen, Korrosionsinhibitor
(die Dosierung erfolgt bezüglich der Komponente B)

Die Stahlelektroden werden unmittelbar vor dem Einbau bzw. vor der Beschichtung mit einem Lösungsmittel entfettet und mit Schleifpapier blank poliert.

Zugleich dienen die Messungen zu Vergleichszwecken, um das erfindungsgemäße Verfahren üblichen korrosionsschützenden Systemen gegenüberzustellen, die durch Zugabe von Korrosionsinhibitoren in die gesamte Betonmischung bewerkstelligt werden. Die potentiostatischen Messungen erfolgen mit Hilfe der üblichen Drei-Elektroden-Anordnung (Mörtelelektrode, platinierte Hilfselektrode, Referenzelektrode (SCE) in 5% NaCl-Lösung. Der Belastungstest dauert 24 h, wobei die angelegte Spannung bei —200 mV (SCE) konstant gehalten und der resultierende Stromfluß gemessen wird.

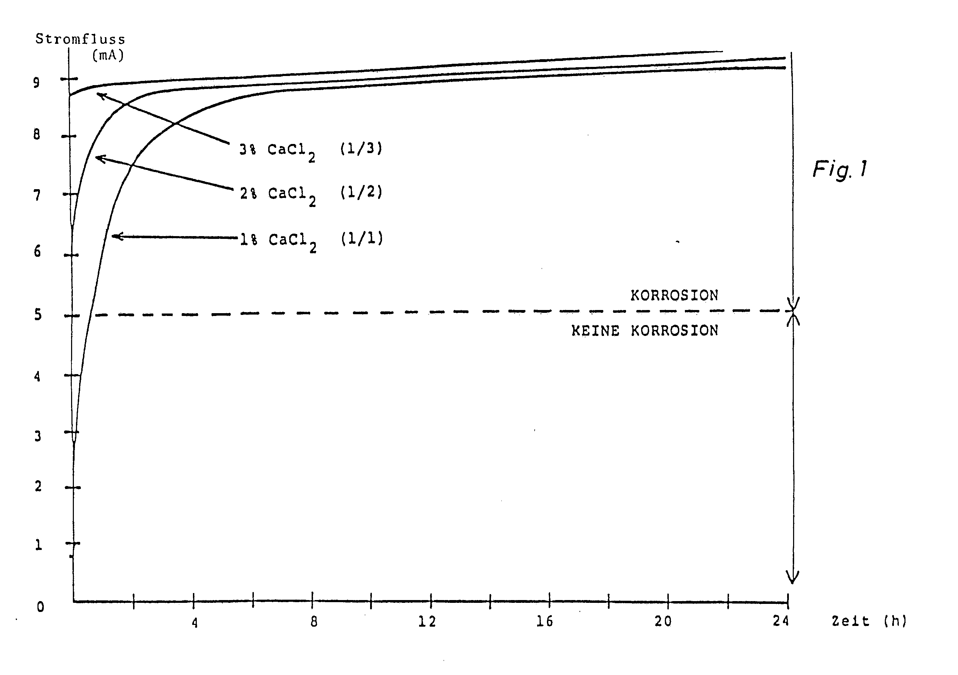

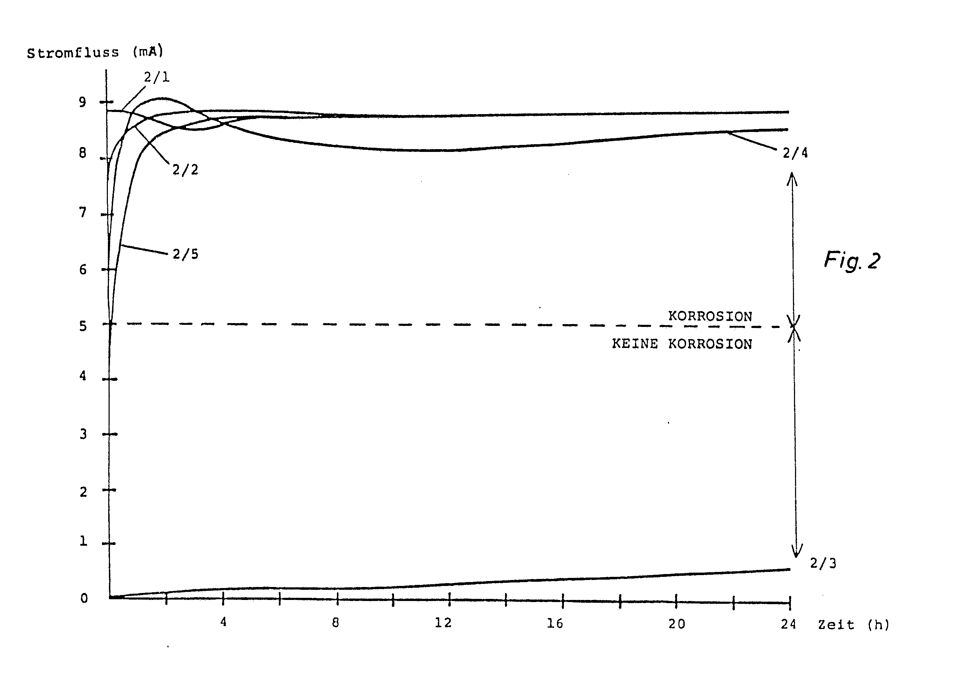

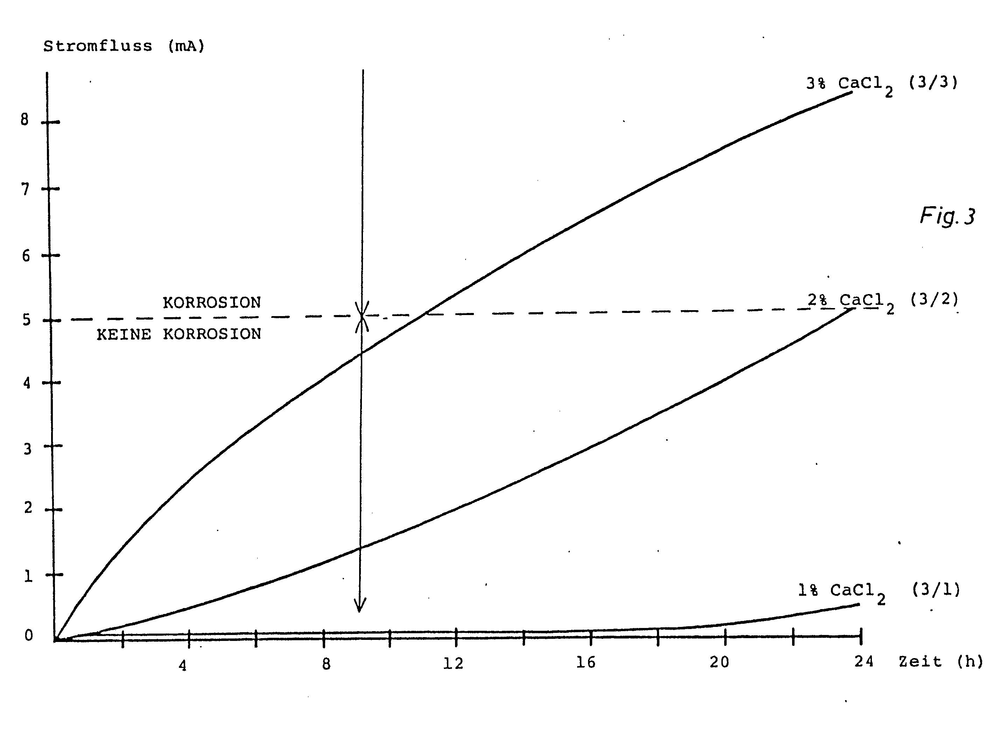

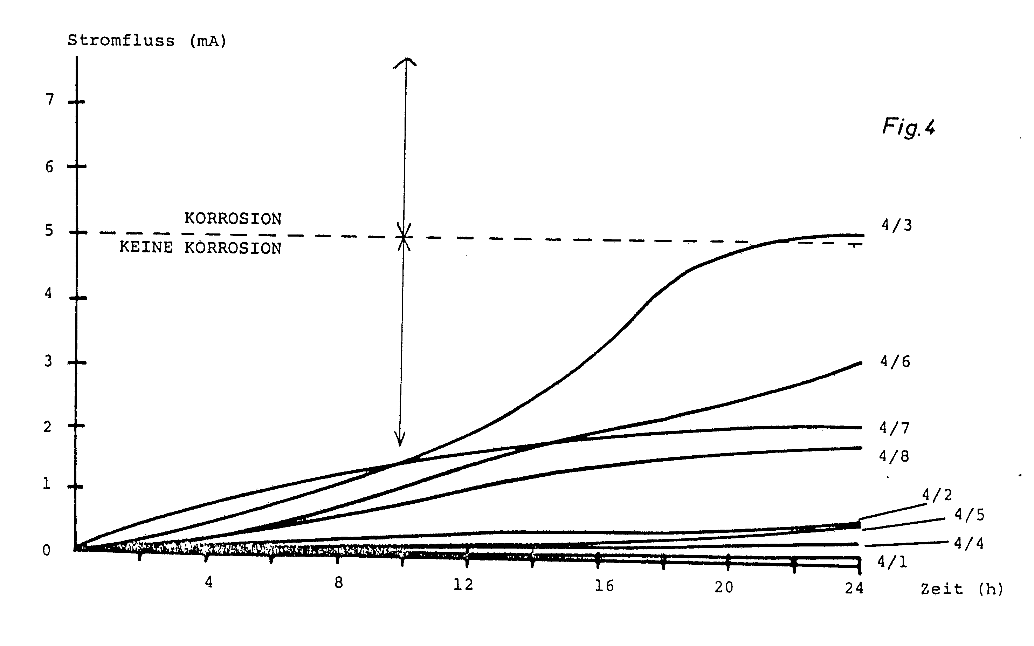

In Tabelle 1 sind die durchgeführten Versuche zusammengestellt und die erhaltenen Resultate in den Fig. 1 bis 4 graphisch dargestellt.

Nach Beendigung des Belastungsversuchs wurden die im Mörtelprisma eingebauten Stahlelektroden freigelegt und auf Korrosionsschäden untersucht. Es stellt sich dabei heraus, daß an den Stahlelektroden, deren Stromfluß während des Belastungstests 5 mA nicht überschritt, optisch keine Korrosionsschäden beobachtet werden konnten.

3

Tabelle 1
Zusammenstellung der durchgeführten Korrosionsversuche für den potentiostatischen
Belastungstest (Versuchsresultate siehe Figuren 1—4)

| Ver-suchs-Nr. | Salzdosie-rung im Mörtel | Stahlbe-schichtung | Inhibitor | Zustand der Stahl-elektrode nach Test |
|---|---|---|---|---|
| 1/1 | 1% CaCl$_2$ | — | — | K, I |
| 1/2 | 2% CaCl$_2$ | — | — | K |
| 1/3 | 3% CaCl$_2$ | — | — | K |
| 2/1 | 3% CaCl$_2$ | — | 1% Rusnein*) | K |
| 2/2 | 3% CaCl$_2$ | — | 3% Rusnein*) | K |
| 2/3 | 1% CaCl$_2$ | — | 6% Rusnein*) | I |
| 2/4 | 2% CaCl$_2$ | — | 6% Rusnein*) | K |
| 2/5 | 3% CaCl$_2$ | — | 6% Rusnein*) | K |
| 3/1 | 1% CaCl$_2$ | kunststoffvergüteter Zementmörtel**) | — | I |
| 3/2 | 2% CaCl$_2$ | kunststoffvergüteter Zementmörtel**) | — | I |
| 3/3 | 3% CaCl$_2$ | kunststoffvergüteter Zementmörtel**) | — | K |
| 4/1 | 1% CaCl$_2$ | erfindungsgemäßer kunststoffvergüteter Zementmörtel mit Korrosionsinhibitor***) | 3% Na-nitrit | I |
| 4/2 | 2% CaCl$_2$ | erfindungsgemäßer kunststoffvergüteter Zementmörtel mit Korrosionsinhibitor***) | 3% Na-nitrit | I |
| 4/3 | 3% CaCl$_2$ | erfindungsgemäßer kunststoffvergüteter Zementmörtel mit Korrosionsinhibitor***) | 3% Na-nitrit | I |
| 4/4 | 1% CaCl$_2$ | erfindungsgemäßer kunststoffvergüteter Zementmörtel mit Korrosionsinhibitor***) | 0,5% Na-nitrit 0,5% Adipinsäure | I |
| 4/5 | 2% CaCl$_2$ | erfindungsgemäßer kunststoffvergüteter Zementmörtel mit Korrosionsinhibitor***) | 0,5% Na-nitrit 0,5% Adipinsäure | I |
| 4/6 | 3% CaCl$_2$ | erfindungsgemäßer kunststoffvergüteter Zementmörtel mit Korrosionsinhibitor***) | 0,5% Na-nitrit 0,5% Adipinsäure | I |
| 4/7 | 3% CaCl$_2$ | erfindungsgemäßer kunststoffvergüteter Zementmörtel mit Korrosionsinhibitor***) | 2% Dicyclohexyl-ammoniumnitrit | I |
| 4/8 | 3% CaCl$_2$ | erfindungsgemäßer kunststoffvergüteter Zementmörtel mit Korrosionsinhibitor***) | 2% Dicyclohexyl-ammoniumnitrit 1% Adipinsäure | I |

*) = Handelsübliches Korrosionsschutzmittel der Firma Onoda Cement (Japan).
**) = Beschichtung mit einem kunststoffvergüteten Mörtel gehört zum heutigen Stand der Technik.
***) = Erfindungsgemäß ausgelegter Korrosionsschutz.
K = Deutliche Korrosionsspuren an der Stahlelektrode sichtbar, z. T. Risse im belasteten Mörtel-prisma beobachtbar.
I = Keine Korrosionsprodukte beobachtbar.

## Beispiel 2

Es werden während 13 Tagen Potentialmessungen (Referenzelektrode: Standard-Kalomel-Elektrode (SCE) an blanken und beschichteten Eisenblechen (100×55×0,1 mm) durchgeführt, die in eine Zementsteinsuspension bei konstantem Chloridgehalt (2% NaCl bzw. Zement) eingetaucht werden.

Die Resultate sollen zeigen, daß auch ungeschützte, blanke Metallstellen in Abwesenheit von Chloridionen mit Hilfe des schützenden, mit einem Korrosionsinhibitor versehenen, Kunststoffmörtels elektrisch passiviert werden können. Dazu werden die Eisenbleche mit einer Etikette (20×24 mm) abgedeckt, welche nach der Beschichtung wieder entfernt wird.

Die Zusammensetzung des Beschichtungsmörtels ist die gleiche wie sie in Beispiel 1 beschrieben worden ist.

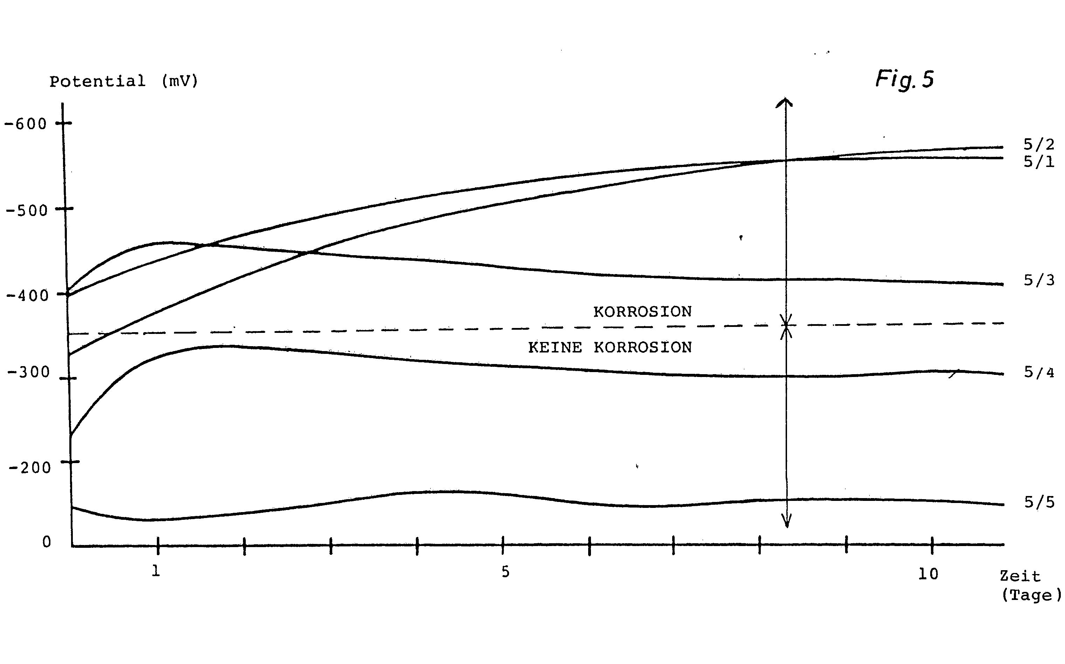

Auf diese Art können Fehlstellen simuliert werden. Die durchgeführten Versuche sind in Tabelle 2 zusammengestellt, und in Figur 5 sind die gemessenen Potentiale für die einzelnen Versuche als Funktion zur Zeit graphisch dargestellt.

Die Interpretation der Resultate erfolgt nach folgenden empirischen Kriterien:

Es stellte sich heraus, daß die Korrosionsgrenze für die meisten Versuche bei −350 mV vs SCE festgelegt werden kann. Daraus kann gefolgert werden, daß bei der beschriebenen Methode dann Korrosionsprodukte beobachtet werden konnten, wenn das Potential der untersuchten Eisenbleche kleiner als −350 mV vs SCE war.

Tabelle 2
Zusammenstellung der durchgeführten Korrosionsversuche (Potentialmessungen)

| Ver-suchs-Nr. | Beschichtung | Inhibitor. | Zustand des Blechs nach 12 Tagen |
|---|---|---|---|
| 5/1 | — | — | K |
| 5/2 | Epoxybeschichtung mit blanken, ungeschützten Fehlstellen | — | K |
| 5/3 | Kunststoffvergüteter Zementmörtel | — | K |
| 5/4 | erfindungsgemäßer kunststoffvergüteter Zementmörtel mit blanken, ungeschützten Fehlstellen | 3% NaNO$_2$ | I |
| 5/5 | erfindungsgemäßer kunststoffvergüteter Zementmörtel ohne »Fehlstellen« | 3% NaNO$_2$ | I |

K = Deutliche Korrosionsspuren (Lochfraß) am Eisenblech beobachtbar.
I = Keine Korrosionsspuren beobachtbar.

## Patentansprüche

1. Verfahren zum Korrosionsschutz von Armierungseisen, Spannkabeln und dergleichen, in Bauteilen, dadurch gekennzeichnet, daß die Armierungseisen bzw. Spannkabel und dergleichen mit einer wäßrigen Schlämme aus 10—99,99% hydraulischen Bindemitteln oder Mischungen davon mit latent hydraulischen Zusätzen und 0,01—10% Korrosionsinhibitoren beschichtet werden.

2. Verfahren nach Anspruch 1, dadurch gekennzeichnet, daß als hydraulisches Bindemittel Zement verwendet wird.

3. Verfahren nach Anspruch 1, dadurch gekennzeichnet, daß als latent hydraulische Zusätze z. B. Flugasche, Silica fume, Schlacken etc. verwendet werden.

4. Verfahren nach Anspruch 1, dadurch gekennzeichnet, daß der Schlämme zusätzlich bis zu 89,99% Polymeren in pulveriger, gelöster, dispergierter oder flüssiger Form und/oder bis zu 89,99% feine Zuschlagstoffe zugegeben wird.

5. Verfahren gemäß Anspruch 1, dadurch gekennzeichnet, daß der Korrosionsinhibitor aus Alkali- oder Erdalkalinitrit, vorzugsweise Natriumnitrit besteht.

6. Verfahren gemäß Anspruch 1, dadurch gekennzeichnet, daß der Korrosionsinhibitor aus einem Gemisch von Alkali- oder Erdalkalinitrit und einer Dicarbonsäure mit 1—10 CH$_2$-Gruppen, vorzugsweise Adipinsäure, besteht.

7. Verfahren gemäß Anspruch 1, dadurch gekennzeichnet, daß der Korrosionsinhibitor aus einem Gemisch von Alkali- oder Erdalkalinitrit und Aminen, vorzugsweise Triazol, Cyclohexylamin oder einem aliphatischen Amin mit 4—17 CH$_2$-Gruppen besteht.

8. Verfahren gemäß Anspruch 1, dadurch gekennzeichnet, daß der Korrosionsinhibitor folgende Zusammensetzung aufweist:

10—100% Alkali- oder Erdalkalinitrit
0—90% Dicarbonsäure
0—90% Amin.

9. Verfahren gemäß Anspruch 4, dadurch gekennzeichnet, daß als Polymer vorzugsweise Acrylate, Styrol-copolymere oder Amino-s-triazinharze eingesetzt werden.

10. Verfahren gemäß Anspruch 1, dadurch gekennzeichnet, daß die Korrosionsschutzschlämme mit bekannten Zementzusatzmitteln wie Verflüssiger, Beschleuniger, Verzögerer oder Expansivkomponenten kombiniert wird.

## Claims

1. A method of protecting reinforcing bars, prestressing cables and similar inside of structures against corrosion, comprising a coating of the reinforcing bars or prestressing cables or similar by an aqueous suspension of 10—99.99% hydraulic binding agents or mixtures thereof with latent hydraulic additives and 0.01—10% corrosion inhibitors.

2. The method of claim 1, wherein said hydraulic binding agent is cement.

3. The method of claim 1, wherein said latent hydraulic additives are chosen from the group fly-ash, silica fume, slags, etc.

4. The method of claim 1, wherein up to 89.99% polymers in a powdery, dissolved, dispersed or liquid state and/or up to 89.99% fine aggregates are added to said suspension.

5. The method of claim 1, wherein said corrosion inhibitor consists of alkali metal nitrite or alkaline earth metal nitrite, preferably of sodium nitrite.

6. The method of claim 1, wherein said corrosion inhibitor consists of a mixture of alkali metal nitrite or alkaline earth metal nitrite and a dicarboxylic acid having 1—10 CH$_2$ groups, preferably adipic acid.

7. The method of claim 1, wherein said corrosion inhibitor consists of a mixture of alkali metal nitrite or alkaline earth metal nitrite and amines, preferably of the group triazole, cyclohexylamine or an aliphatic amine having 4—17 CH$_2$ groups.

8. The method of claim 1, wherein said corrosion inhibitor has the following composition:

10—100% alkali metal nitrite or alkaline earth metal nitrite
0—90% dicarboxylic acid
0—90% amine.

9. The method of claim 4, wherein said polymers are preferably acrylates, styrene-copolymers or amino-s-triazine resins.

10. The method of claim 1, wherein said corrosion protection suspensions are combined with known cement additives such as plasticizers, accelerators, retarders or expansion aids.

## Revendications

1. Procédé pour la protection contre la corrosion d'armatures en fer, de câbles de tension et analogues dans des éléments de construction, caractérisé en ce que les armatures, les câbles de tension et analogues sont enduits d'une bouillie aqueuse de 10 à 99,99% de liants hydrauliques ou de mélanges de liants hydrauliques et d'additifs hydrauliques latents et de 0,01 à 10% d'inhibiteurs de la corrosion.

2. Procédé suivant la revendication 1, caractérisé en ce que le liant hydraulique utilisé est le ciment.

3. Procédé suivant la revendication 1, caractérisé en ce que les additifs hydrauliques latents sont choisis entre autres parmi les cendres volantes, la silice fumée, les scories, etc.

4. Procédé suivant la revendication 1, caractérisé en ce l'on incorpore en outre à la bouillie jusqu'à 89,99% de polyméres à l'état pulvérulent, en solution ou en dispersion ou à l'état liquide et (ou) jusqu'à 89,99% d'agrégats fins.

5. Procédé suivant la revendication 1, caractérisé en ce que l'inhibiteur de corrosion est un nitrite de métal alcalin ou alcalino-terreux, de préférence du nitrite de sodium.

6. Procédé suivant la revendication 1, caractérisé en ce que l'inhibiteur de corrosion est constitué d'un mélange d'un nitrite de métal alcalin ou alcalino-terreux et d'un acide dicarboxylique comportant 1 à 10 groupes —CH$_2$, de préférence d'acide adipique.

7. Procédé suivant la revendication 1, caractérisé en ce que l'inhibiteur de corrosion est constitué d'un mélange d'un nitrite de métal alcalin ou alcalino-terreux et d'amines, de préférence du triazole, de la cyclohexylamine ou une amine aliphatique comportant 4 à 17 groupes —CH$_2$.

8. Procédé suivant la revendication 1, caractérisé en ce que l'inhibiteur de corrosion est composé

de 10 à 100% de nitrite de métal alcalin ou alcalinoterreux
0 à 90% d'acide dicarboxylique
0 à 90% d'amine.

9. Procédé suivant la revendication 4, caractérisé en ce que le polymère est de préférence choisi parmi les acrylates, les copolymères du styrène et les résines d'amino-s-triazine.

10. Procédé suivant la revendication 1, caractérisé en ce que les bouillies de protection contre la corrosion sont combinées avec des additifs connus pour le ciment tels que des fluidifiants, des accélérateurs ou retardateurs de prise et des agents d'expansion.

Fig. 1

Fig. 2

Fig. 3

0 070 482

Fig. 4

Fig. 5